**Europäisches Patentamt**

**European Patent Office**

**Office européen des brevets**

(19)

(11) Numéro de publication : **0 517 567 A1**

# (12) DEMANDE DE BREVET EUROPEEN

(21) Numéro de dépôt : **92401448.3**

(22) Date de dépôt : **26.05.92**

(51) Int. Cl.⁵ : **H04L 12/56**

---

(30) Priorité : **30.05.91 FR 9106520**

(43) Date de publication de la demande :
**09.12.92 Bulletin 92/50**

(84) Etats contractants désignés :
**AT BE CH DE DK ES FR GB IT LI NL SE**

(71) Demandeur : **ALCATEL CIT**
**12 Rue de la Baume**
**F-75008 Paris (FR)**

(72) Inventeur : **Mobasser, Bahman**
**12, rue de Villeneuve**
**F-78310 Maurepas (FR)**

(74) Mandataire : **Sciaux, Edmond et al**
**c/o SOSPI, 14-16 rue de la Baume**
**F-75008 Paris (FR)**

---

(54) **Procédé de gestion des flux dans un réseau numérique de télécommunications, à intégration de service et à large bande.**

(57)    Lors de l'établissement d'une communication interactive entre un terminal et un réseau de connexion, comportant plusieurs périodes et nécessitant au moins une connexion constituée de ressources respectivement différentes pour ces périodes, il consiste à :

— émettre du terminal vers le réseau de connexion un message définissant les ressources nécessaires pour toutes les connexions et pour toutes les périodes de cette communication ;

— émettre du réseau de connexion vers le terminal un message indiquant que le réseau possède de telles ressources pour au moins une communication.

Il consiste, au cours de chaque communication interactive, avant chaque nouvelle période nécessitant des ressources différentes, et pour chaque connexion de cette communication, à :

— émettre du terminal vers le réseau de connexion un message indiquant chaque connexion qui sera nécessaire pendant cette nouvelle période et indiquant les ressources nécessaires pour cette connexion ;

— émettre du réseau de connexion vers ce terminal un message confirmant que ces ressources sont effectivement réservées par le réseau ;

— stocker dans le terminal, les données à transmettre vers le réseau de connexion, jusqu'à ce que le terminal reçoive ce message.

Ainsi, à chaque instant (t), la capacité (R) des ressources réservées par le réseau à une communication interactive sont rigoureusement adaptées au débit (D) des données binaires à transmettre par cette communication.

Application aux réseaux de télécommunications utilisant la technique ATM.

FIG.3

L'invention concerne un procédé de gestion des flux dans un réseau numérique de télécommunications, à intégration de services et à large bande, à mode de transfert asynchrone (ATM). Un tel réseau permet de transmettre n'importe quel type de données sous la forme de paquets ayant un nombre de bits fixé, et appelés cellules. Ces cellules sont transmises de manière asynchrone et le débit des données binaires émises par chaque terminal raccordé au réseau peut être très variable.

La gestion des flux dans un tel réseau a deux buts :

- protéger le fonctionnement normal du réseau, en évitant une congestion quel que soit le débit que tente de transmettre les terminaux reliés au réseau;

- rendre maximal le nombre d'appels ayant été traités avec succès.

Un procédé de gestion des flux doit atteindre ces deux buts simultanément, et non l'un au détriment de l'autre, en adaptant dynamiquement la capacité des ressources de transmission et de commutation du réseau, en fonction des débits binaires variables présents sur les diverses connexions établies par le réseau à chaque instant. Cette adaptation doit être réalisée à la fois à l'interface entre le réseau et chaque terminal, et à l'intérieur même du réseau. Il doit prendre en compte deux types de flux : les flux à débit constant et les flux à débit variable.

Les flux à débit binaire constant sont faciles à gérer. Il est possible de demander au terminal de chaque usager qui établit un appel, quel sera le débit des données qu'il transmettra; de dimensionner les ressources du réseau en fonction du débit indiqué par le terminal; de superviser le débit réellement transmis au cours de la communication établie; et éventuellement de limiter ce débit s'il dépasse le débit annoncé lors de l'établissement de la communication.

La gestion des flux à débit variable est plus délicate. Il est possible de demander au terminal de chaque usager qui établit une communication quelle sera la valeur maximale du débit des données qu'il peut émettre. Pour éviter de réserver une capacité de ressources surabondante pendant la plupart du temps, le réseau ne réserve qu'une capacité de ressources inférieure à la valeur maximale indiquée par le terminal. Par conséquent, à certains moments, le débit émis par un tel terminal excède les possibilités de transmission et de commutation du réseau.

Les procédés connus de gestion des flux dans un réseau numérique de télécommunication sont des procédés défensifs consistant à faire réagir le réseau en fonction des débits effectivement émis par les terminaux. Les moyens d'action sont les suivants :

- stocker des données dans des files d'attente dans les noeuds du réseau;

- rejeter explicitement une partie du trafic;

- laisser perdre volontairement une partie des données à transmettre.

La durée de transit est modulée en faisant varier la durée pendant laquelle les données sont stockées dans les files d'attente du réseau. Ce stockage est évidemment limité par la capacité des files d'attente. La rétroaction sur les terminaux est basée sur le fait qu'un terminal peut détecter une limitation de débit imposée aux données émises par ce terminal, et se traduisant par des pertes de données. Il peut réagir en réduisant le débit des données qu'il émet.

Un tel procédé défensif est décrit par exemple dans la demande de brevet français n°89.1551. Ce procédé connu tient compte du type de service assuré par chaque connexion afin d'optimiser en même temps l'utilisation des ressources et la qualité du service, et consiste essentiellement à retarder ou à laisser perdre des cellules de données, dans des limites qui sont prédéterminées en fonction du type de service assuré par les terminaux connectés par la connexion considérée.

Ces procédés connus, de type défensif, remplissent l'objectif d'éviter une congestion du réseau, mais le second objectif, rendre maximal le nombre d'appels se terminant avec succès, dépend de la capacité des couches supérieures du réseau de l'application d'usager, dans chaque terminal, à tolérer les limitations de débit provoquées par le réseau. Ces limitations de débit sont acceptables dans le cadre des transmissions traditionnelles de données car les applications dans ce domaine sont relativement tolérantes aux variations du retard de transmission dans le réseau. Par contre, d'autres types d'application ne peuvent pas supporter une augmentation du temps de transit ou une augmentation des pertes de données pendant la transmission dans le réseau.

Une communication interactive est une communication du type à débit variable et qui correspond typiquement à une application dans laquelle la quantité d'informations échangée à différents instants est déterminée par l'utilisateur du terminal au cours de la communication elle-même. Un exemple typique de communication interactive est la consultation d'une base de données, en fonction d'un menu. Au cours de la communication, l'utilisateur du terminal décide de la nature et de la quantité des informations qui seront émises ou reçues par son terminal, au vu des informations fournies par le dialogue avec la base de données. Dans un tel cas, l'utilisateur d'un terminal ne peut indiquer au réseau, au moment de l'établissement de la communication, la capacité de ressources qui sera nécessaire au cours de chaque période de la communication. Il peut seulement indiquer le type des ressources éventuellement nécessaires et la capacité maximale de ces ressources. Par contre, au cours de la communication, il serait en mesure d'indiquer la capacité des ressources dont il va avoir besoin au cours de la période suivant immédiatement l'instant considéré.

Le but de l'invention est de proposer un procédé de gestion des flux qui ne soit pas basé sur l'acceptation à priori d'une dégradation de la qualité de service comme moyen de défense du réseau, mais qui soit basé sur une prédiction de certains flux binaires variables afin d'ajuster au mieux la réservation des ressources en fonction des flux binaires qui sont prédits.

L'objet de l'invention est un procédé de gestion des flux dans un réseau numérique de télécommunications, à intégration de services et à large bande, comportant une pluralité de terminaux et un réseau de connexion;

caractérisé en ce que, lors de l'établissement d'une communication interactive entre un terminal et le réseau de connexion, cette communication comportant plusieurs périodes et nécessitant au moins une connexion constituée de ressources respectivement différentes pour ces périodes, ces ressources étant prévisibles et définissables au moyen d'au moins un paramètre, il consiste à :

- émettre du terminal vers le réseau de connexion un message dit de déclaration, définissant par au moins un paramètre les ressources respectivement nécessaires pour toutes les connexions et pour toutes les périodes de cette communication;
- émettre du réseau de connexion vers le terminal un message dit d'accord indiquant que le réseau possède des ressources conformes à chaque paramètre contenu dans le message de déclaration;

et en ce que, au cours de cette communication interactive, avant chaque nouvelle période nécessitant des ressources différentes, il consiste à :

- émettre du terminal vers le réseau de connexion un message dit de requête d'utilisation, indiquant chaque connexion qui sera utilisée pendant cette nouvelle période et indiquant au moins un paramètre définissant les ressources nécessaires pour cette connexion pendant cette nouvelle période;
- émettre du réseau de connexion vers ce terminal un message de confirmation, pour confirmer que sont disponibles des connexion pourvues de ressources conformes à chaque paramètre indiqué dans le message de requête d'utilisation;
- stocker dans le terminal les données de cette communication, à transmettre vers le réseau de connexion, jusqu'à ce que le terminal reçoive le message de confirmation.

Le procédé ainsi caractérisé permet au réseau de connexion d'attribuer à une communication exactement les ressources nécessaires pour chaque période de la transmission de données, sans réserver inutilement des ressources excédentaires, par conséquent il résoud au mieux le problème de gestion des flux en ce qui concerne les communications du type communication interactive.

L'invention sera mieux comprise et d'autres détails apparaîtront à l'aide de la description ci-dessous et des figures l'accompagnant :

- les figures 1, 2, 3 représentent respectivement le débit de données et la capacité des ressources réservées pour une communication à débit variable, respectivement selon deux procédés de gestion de flux selon l'art antérieur, et selon le procédé selon l'invention;
- la figure 4 illustre un exemple de communication interactive mettant en oeuvre trois connexions pouvant avoir différents débits selon les périodes considérées;
- les figures 5 et 6 représentent les chemins suivis par les données et les messages de signalisation pour un exemple de mise en oeuvre du procédé selon l'invention, respectivement pour une communication interactive nécessitant une seule connexion, et pour une communication interactive nécessitant trois connexions.

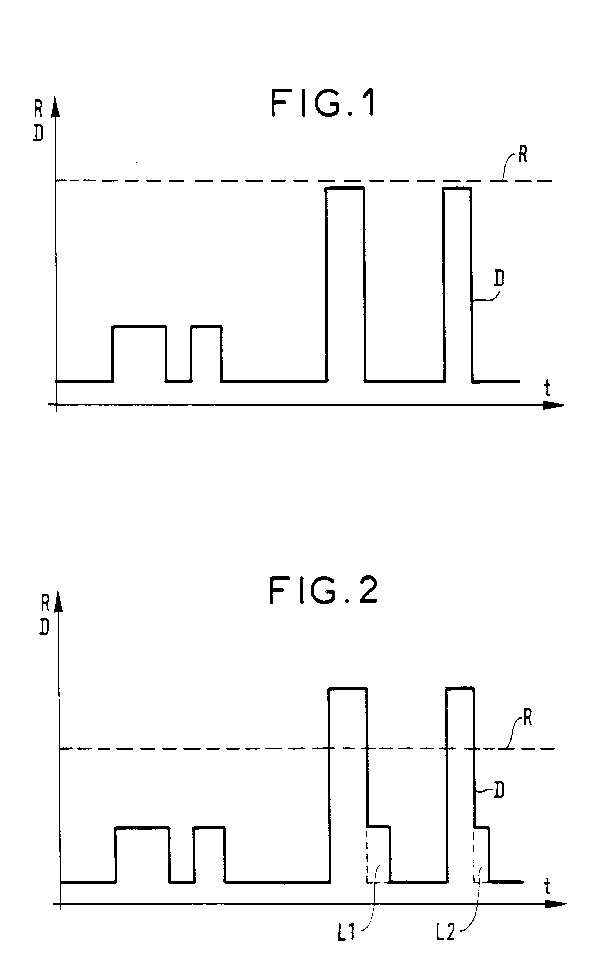

La figure 1 illustre un procédé connu de gestion de flux consistant à réserver des ressources ayant une capacité correspondant au débit maximal prévu pour chaque connexion au cours d'une communication. Dans cet exemple, la communication est une communication interactive sur une seule connexion et comportant des périodes pendant lesquelles le débit prend trois valeurs nettement différentes. La figure représente le graphe D de ce débit en fonction du temps t, et représente la capacité R des ressources réservées à cette communication, en fonction du temps. Selon ce procédé connu, la capacité des ressources réservées est constante et égale au débit maximal de cette communication, ce qui conduit à une importante sous-utilisation des ressources pendant la plupart du temps de la communication.

La figure 2 illustre l'application d'un autre procédé connu consistant à réserver des ressources ayant une capacité systématiquement inférieure à la capacité correspondant au débit maximal pendant la communication. Le graphe D représente le débit effectivement émis par un terminal sur une connexion, et le graphe R représente la capacité des ressources réservées pour transmettre ce débit. Il apparaît que pendant la plupart du temps la capacité des ressources réservées est inutilement grande, mais que pendant certaines périodes elle est inférieure au débit effectivement transmis par le terminal. Pendant ces dernières périodes, une partie des données transmises sont perdues à cause du manque de capacité des ressources. Le terminal expéditeur est informé de la perte de ces données, par le terminal destinataire de ces données, et il émet une seconde fois les données perdues. La réémission des données perdues se traduit par une prolongation L1 et L2 des périodes d'émission où il y a des pertes.

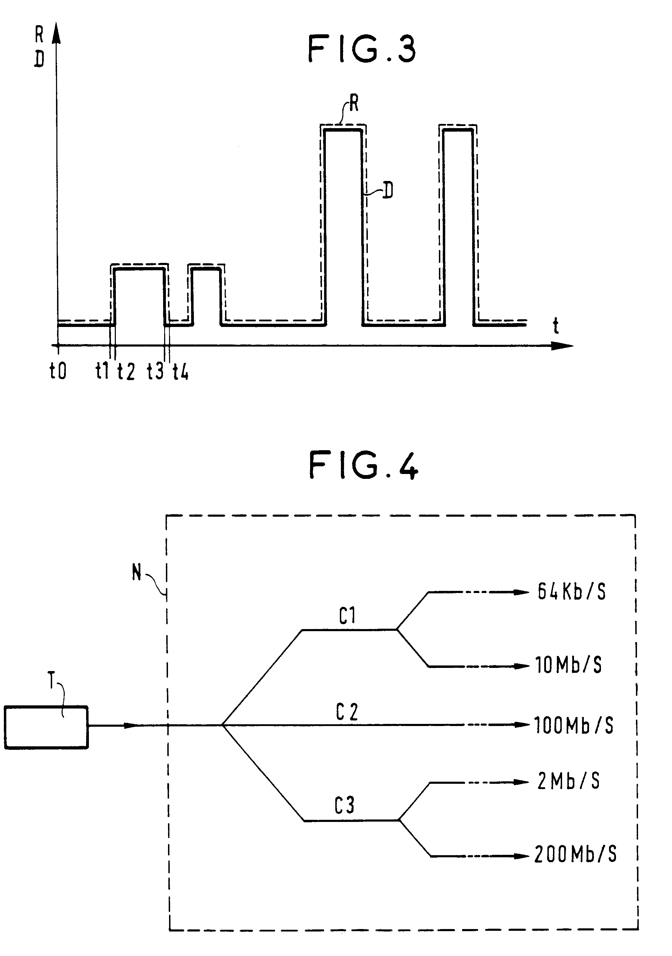

La figure 3 représente le graphe D du débit en fonction du temps t, émis par un terminal sur une connexion pendant une communication interactive, et le graphe R de la capacité des ressources réservées par le réseau, au cours de cette communication, pour acheminer les données émises par ce terminal, en mettant en oeuvre le procédé selon l'invention. Le débit des données émises est constant à l'intérieur de chacune des périodes de temps constituant cette communication. Il apparaît que le graphe R de la capacité des ressources réservées coïncide à chaque instant avec le graphe D du débit binaire à transmettre, de telle sorte qu'il n'y a jamais sous-utilisation des ressources réservées, ni insuffisance de celles-ci par rapport au débit binaire émis par le terminal.

Un exemple typique de communication interactive est la consultation d'une base de données médicales. Après l'établissement de la communication, l'utilisateur consulte la base de données pour identifier des patients correspondant à certains critères de sélection. Il demande ensuite le transfert des archives détaillées concernant les patients sélectionnés, ces archives pouvant inclure des images radiographiques. L'utilisation de menus de sélection produit un débit de faible valeur (inférieur à 1Kb/s). La mise en oeuvre du menu de la base de données utilise des débits binaires moyens, de l'ordre de 1 à 2 Mb/s. Le transfert des archives complètes pour chaque patient peut mettre en oeuvre un débit très élevé, de l'ordre de 30 à 150 Mb/s.

Avant l'établissement de la communication, le terminal connaît les différentes capacités des ressources qui peuvent être nécessaires au cours des différentes périodes d'une telle communication interactive. Selon l'invention, le terminal envoie au réseau de connexion, avant l'établissement de la communication, à l'instant to, un message de déclaration indiquant la capacité des ressources nécessaires pour toutes les connexions et pour toutes les périodes qui vont constituer cette communication, sans savoir exactement à quel moment ces ressources seront nécessaires. La capacité des ressources constituant une connexion est essentiellement définie par une valeur de débit de données. En plus du débit, le message de déclaration peut contenir optionnellement une indication du taux d'erreur maximal et du retard maximal admissibles par les données à transmettre, ainsi qu'une indication du volume typique des données à transmettre.

La figure 4 illustre schématiquement cette étape de mise en oeuvre du procédé selon l'invention. Un terminal T va établir une communication interactive par l'intermédiaire d'un réseau de connexion N, cette communication comportant trois connexions C1, C2, C3. La communication C1 peut avoir un débit soit de 64 Kb/s, soit de 10 Mb/s. La connexion C2 a un débit fixe de 100 Kb/s. La connexion C3 peut avoir un débit soit de 2 Kb/s, soit de 200 Mb/s. Le terminal T envoie au réseau N un message de déclaration indiquant ces trois connexions et leurs valeurs de débit.

Avant l'établissement de la communication, le réseau N répond au terminal par un message d'accord lui indiquant qu'il possède des ressources conformes aux paramètres contenus dans le message de déclaration. Le réseau N ne réserve pas ces ressources, il assure simplement le terminal T qu'il a des ressources suffisantes pour acheminer au moins une communication ayant les paramètres mentionnés dans le message de déclaration. Par contre, le réseau N peut d'ores et déjà identifier différentes routes correspondant aux différentes ressources nécessaires pour la communication.

Au cours de cette communication interactive, avant chaque nouvelle période nécessitant des ressources différentes, le terminal T émet vers le réseau de connexion N un message de requête d'utilisation indiquant chaque connexion C1, ou C2, ou C3 qui sera nécessaire pendant cette nouvelle période et indiquant le débit définissant les ressources nécessaires pour cette connexion pendant cette nouvelle période.

Dans l'exemple représenté sur la figure 3, le message de requête d'utilisation est envoyé à l'instant t1. Le réseau de connexion N répond immédiatement par un message de confirmation pour confirmer que sont disponibles des connexions pourvues de ressources conformes aux paramètres contenus dans le message de requête d'utilisation. Le terminal reçoit le message de confirmation à l'instant t2, peu après t1, et il commence alors à émettre des données avec une nouvelle valeur de débit qui correspond à la nouvelle valeur de capacité des ressources réservées par le réseau de connexion N. Entre les instants t1 et t2 le terminal T attend le message de confirmation en stockant dans une mémoire tampon les données qu'il doit transmettre vers le réseau de connexion N et pour lesquelles il a besoin d'une plus grande capacité de ressources de transmission et de commutation.

A l'instant t3, le terminal T a terminé la transmission d'un lot de données. Il n'a désormais besoin de transmettre qu'avec un débit beaucoup plus réduit. Il envoit alors au réseau N un nouveau message de requête d'utilisation indiquant chaque connexion qui sera nécessaire pendant la prochaine période, et indiquant les nouvelles valeurs de débit définissant les ressources nécessaires pour ces connexion pendant cette nouvelle période. A l'instant t4, peu éloigné de t3, il reçoit un message de confirmation émis par le réseau de connexion N et lui confirmant que sont disponibles des connexions constituées de ressources conformes à ces nouvelles valeurs de débit. Il commence alors à transmettre des données sur ces nouvelles connexions avec ces nouvelles valeurs de débit.

La déclaration des paramètres définissant les ressources nécessaires est faite indépendamment pour chaque connexion utilisée au cours d'une même communication. Ces paramètres peuvent être inclus dans un même message de déclaration ou bien peuvent être inclus chacun dans un message de déclaration indépendant. De manière similaire, pendant une communication, le message de requête d'utilisation peut être indépendant pour chacune des connexions à réserver pour une même communication. Une communication relie généralement plusieurs terminaux, mais le procédé selon l'invention est appliqué indépendamment pour les données émises par chacun de ces deux terminaux, autrement dit les messages de déclaration, de requête d'utilisation, et de confirmation sont totalement indépendants pour les deux sens de transmission entre les terminaux reliés par une même communication.

Le protocole de signalisation qui est utilisé pour cette gestion des ressources du réseau N est situé à un niveau supérieur à la couche de signalisation classique d'un réseau à transfert en mode temporel asynchrone, et cette signalisation est entièrement transparente pour cette couche de signalisation classique. Cette signalisation particulière pour la gestion des ressources est plus rapide que la signalisation classique, cette dernière ayant un délai typique de 100 millisecondes qui est prohibitif pour la mise en oeuvre du procédé selon l'invention. La réalisation de ce protocole de signalisation particulier est à la portée de l'Homme du Métier.

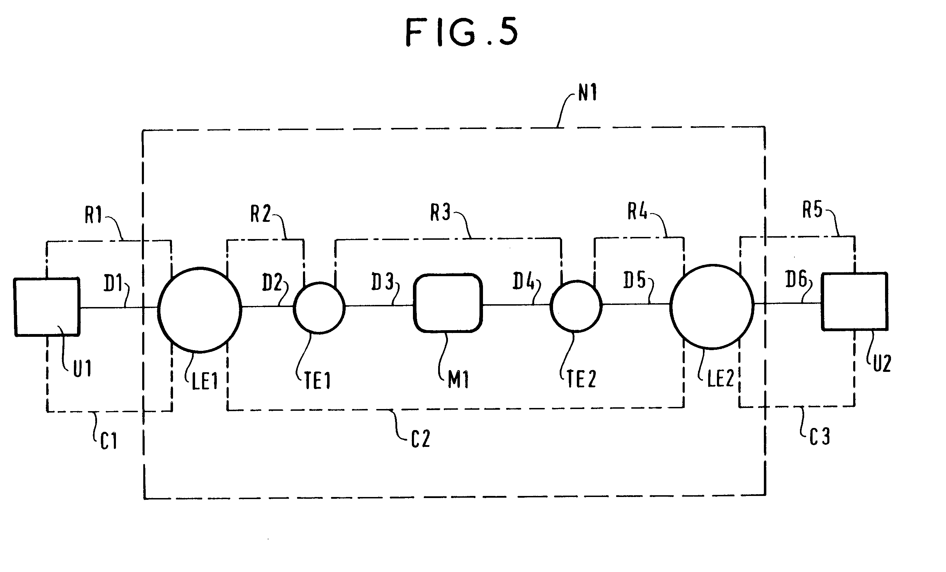

La figure 5 représente les chemins suivis par les messages de signalisation et les données lors de mise en oeuvre du procédé selon l'invention, pour une communication interactive nécessitant une seule connexion. Le terminal U1 d'un utilisateur est relié au terminal U2 d'un autre utilisateur, par un réseau de connexion N1. Dans cet exemple la communication est assurée par un central local LE1, un centre de transit TE1, un centre de commutation M1, un centre de transit TE2 et un central local LE2. Les données suivent un chemin D1, D2, D3, D4, D5, D6 qui passe par chacun de ces noeuds. La signalisation relative à la gestion des ressources suit le chemin R1, R2, R3, R4, R5 qui passe par les noeuds LE1, TE1, TE2, LE2, mais ne passe pas par le centre de commutation M1. La signalisation classique relative au traitement d'appels suit le chemin C1, C2, C3 qui passe seulement par les centraux locaux LE1 et LE2.

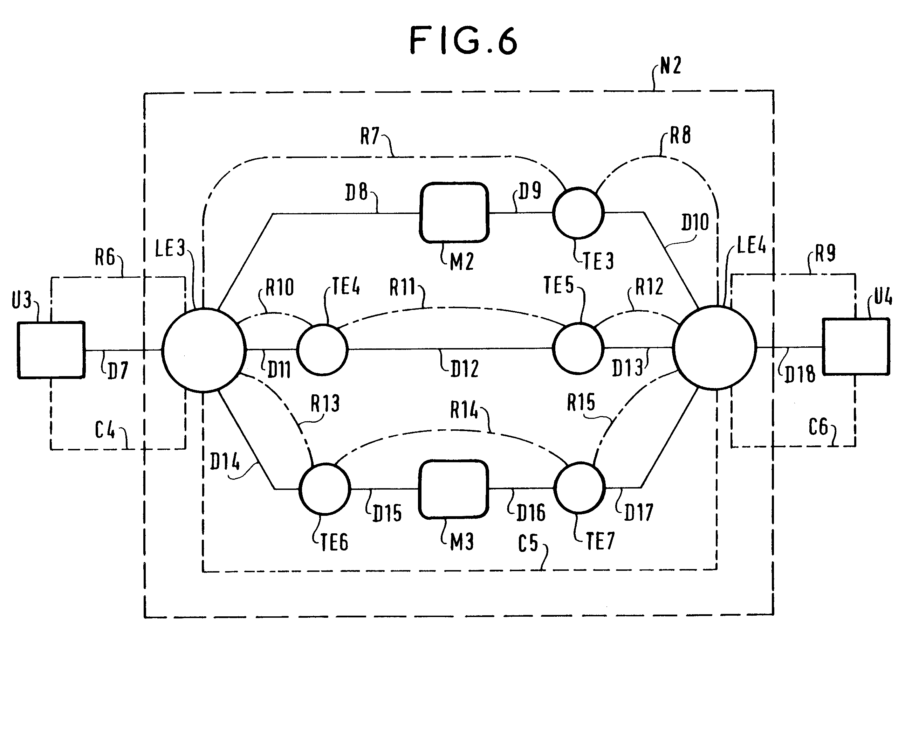

La figure 6 représente les chemins suivis par les données et par les messages de signalisation pour une communication interactive nécessitant trois connexions distinctes. Cette communication relie le terminal U3 d'un utilisateur au terminal U4 d'un autre utilisateur, par l'intermédiaire d'un réseau de connexion N2. Dans cet exemple, les noeuds utilisés dans le réseau de connexions N2 pour une première connexion sont : un central local LE3, un centre de commutation M2, un centre de transit TE3, et un central local LE4. Les noeuds utilisés dans le réseau de connexion N2 pour la deuxième connexion sont : le central local LE3, deux centres de transit TE4, TE5 ; et le central local LE4. Les noeuds utilisés dans le réseau de connexion N2 pour la troisième communication sont : le central local LE3, un centre de transit TE6, un centre de commutation M3, un centre de transit TE7, et le central local LE4.

Entre le terminal U3 et le central local LE3 les données suivent un chemin unique D7 quelle que soit la connexion en cours d'utilisation, la signalisation relative à la gestion des ressources suit un chemin unique R6, et la signalisation relative au traitement d'appels suit un chemin unique C4, pour toutes les connexions.

Pour la première connexion, les données suivent un chemin D8, D9, D10 allant du centre local LE3 au centre local LE4 via le centre de commutation M2 et le centre de transit TE3, alors que la signalisation relative à la gestion des ressources suit un chemin R7, R8 transitant seulement par le centre de transit TE3. Pour la deuxième connexion, les données suivent un chemin D11, D12, D13, allant du central local LE3 au central local LE4 via les centres de transit TE4 et TE5, alors que la signalisation relative à la gestion des ressources suit un chemin R10, R11, 12 via les mêmes centres de transit TE4, TE5. Pour la troisième connexion, les données suivent un chemin D14, D15, D16, D17 allant du central local LE3 au central local LE4 via le centre de transit TE6, le centre de commutation M3, et le centre de transit TE7 ; alors que la signalisation relative à la gestion des ressources suit un chemin R13, R14, R15, transitant seulement par les centres de transit TE6 et TE7. La signalisation classique relative au traitement d'appels, suit un chemin C5 allant directement du central local LE3 au central local LE4.

Du central LE4 au terminal U4 la communication suit un chemin unique D18 pour les données, R9 pour la signalisation relative à la gestion des ressources, et C6 pour la signalisation relative à la commande d'appel, quelle que soit la connexion en cours d'utilisation.

## Revendications

1) Procédé de gestion des flux dans un réseau numérique de télécommunications, à intégration de services et à large bande, comportant une pluralité de terminaux et un réseau de connexion;

caractérisé en ce que, lors de l'établissement d'une communication interactive entre un terminal (U3) et le réseau de connexion (N2), cette communication comportant plusieurs périodes et nécessitant au moins une connexion constituée de ressources respectivement différentes pour ces périodes, ces ressources étant prévisibles et définissables au moyen d'au moins un paramètre, il consiste à :

- émettre du terminal (U3) vers le réseau de connexion (N2) un message dit de déclaration, définissant par au moins un paramètre les ressources respectivement nécessaires pour toutes les connexions et pour toutes les périodes de cette communication;

- émettre du réseau de connexion (N2) vers le terminal (U3) un message dit d'accord indiquant que le réseau possède des ressources conformes à chaque paramètre contenu dans le message de déclaration;

et en ce que, au cours de cette communication interactive, avant chaque nouvelle période nécessitant des ressources différentes, il consiste à :

- émettre du terminal (U3) vers le réseau de connexion (N2) un message dit de requête d'utilisation, indiquant chaque connexion qui sera utilisée pendant cette nouvelle période et indiquant au moins un paramètre définissant les ressources nécessaires pour cette connexion pendant cette nouvelle période;

- émettre du réseau de connexion (N2) vers ce terminal (U3) un message de confirmation, pour confirmer que sont disponibles des connexions pourvues de ressources conformes à chaque paramètre indiqué dans le message de requête d'utilisation;

- stocker dans le terminal (U3) les données de cette communication, à transmettre vers le réseau de connexion (N2), jusqu'à ce que le terminal (U3) reçoive le message de confirmation.

2) Procédé selon la revendication 1, caractérisé en ce que le paramètre contenu dans le message de déclaration est le débit des données à transmettre sur une connexion.

3) Procédé selon la revendiction 1, caractérisé en ce que le paramètre contenu dans le message de déclaration est le retard maximal tolérable par les données à transmettre sur une connexion.

4) Procédé selon la revendication 1, caractérisé en ce que le paramètre contenu dans le message de déclaration est le taux d'erreur binaire maximal tolérable par les données à transmettre sur une connexion.

# FIG.1

# FIG.2

FIG.3

FIG.4

# FIG.5

EP 0 517 567 A1

FIG.6

**Office européen des brevets**

# RAPPORT DE RECHERCHE EUROPEENNE

Numero de la demande

EP 92 40 1448

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | IEEE JOURNAL ON SELECTED AREAS IN COMMUNICATIONS, vol. 6, no. 9, decembre 1988, pages 1609-1616, New York, US; H. OHNISHI et al.: "Flow control schemes and delay/loss tradeoff in ATM networks" <br> * Alinéa E * <br> --- | 1-4 | H 04 L 12/56 |
| Y | EP-A-0 384 758 (HITACHI) <br> * Revendications 1-3; figures 2,3,6 * <br> --- | 1-4 | |
| A | INTERNATIONAL SWITCHING SYMPOSIUM 1990, Stockholm, 27 mai - 1 juin 1990, vol. 1, pages 111-118; K. SÄLLBERG et al.: "A resource allocation framework in B-ISDN" <br> * Page 113, colonne de droite; page 114, section 3.1 * <br> --- | 1-4 | |
| A | EP-A-0 411 674 (FUJITSU) <br> * Revendications 1,7-9 * <br> --- | 2-4 | **DOMAINES TECHNIQUES RECHERCHES (Int. Cl.5)** |
| A | EP-A-0 214 625 (ATT) <br> * Page 3, ligne 1 - page 4, ligne 25 * <br> --- | 1 | H 04 L |
| A | INTERNATIONAL SWITCHING SYMPOSIUM 1987, Phoenix, Arizona, 15-20 mars 1987, vol. 3, pages 665-670; Y. BRETECHER: "Network signalling evolution in ISDN and impacts on switching systems" <br> * Page 666, colonne de droite, ligne 43 - page 667, colonne de gauche, ligne 17; page 667, colonne de droite, ligne 37 - page 668, colonne de gauche, ligne 26 * <br> ----- | 1 | |

Le présent rapport a été établi pour toutes les revendications

| Lieu de la recherche | Date d'achèvement de la recherche | Examinateur |
|---|---|---|
| LA HAYE | 20-08-1992 | ALI A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)